# FASCICULE DE BREVET EUROPEEN

(11) **EP 2 155 476 B1**
(45) Date de publication et mention de la délivrance du brevet: **14.09.2011**
(21) Numéro de dépôt: 08805970.4
(22) Date de dépôt: 10.06.2008
(51) Int. Cl.: B29C 70/54, B29K 307/04, B29B 11/16

(54) **PROCEDE DE FABRICATION D'UN MATERIAU COMPOSITE DANS LEQUEL AU MOINS UN FIL TORSADE EST DEPOSE ET MATERIAU COMPOSITE AINSI OBTENU**
VERFAHREN ZUR HERSTELLUNG EINES VERBUNDMATERIALS MIT MINDESTENS EINEM DARIN GEWUNDENEN FADEN
METHOD FOR MAKING A COMPOSITE MATERIAL HAVING AT LEAST ONE TWISTED THREAD DEPOSITED THEREIN

(30) Priorité: 12.06.2007 FR 0755680; 16.07.2007 FR 0756503
(43) Date de publication de la demande: 24.02.2010
(73) Titulaire: Hexcel Reinforcements, 01120 Dagneux (FR)
(72) Inventeur: BERAUD, Jean-Marc, F-38140 Rives (FR); BRUYERE, Alain, F-38630 Les Avenieres (FR)
(74) Mandataire: Sarlin, Laure V.
(86) Numéro de dépôt international: PCT/FR2008/051035
(87) Numéro de publication internationale: WO 2008/155504

(56) Documents cités:
- EP-A- 1 136 216
- EP-A- 1 469 113
- FR-A- 2 889 104
- US-A- 4 137 354

## Description

La présente invention concerne le domaine technique des préformes composites. L'invention a pour objet un procédé de dépose d'au moins un fil particulièrement adapté à la constitution de préformes dont au moins une partie est courbe, par exemple de type annulaire ou ellipsoïdale. L'invention trouve notamment application dans le domaine des pièces composites utilisées dans l'industrie automobile, aéronautique ou navale.

La fabrication de pièces ou d'articles composites, c'est-à-dire comprenant, d'une part, un ou plusieurs renforts fibreux et, d'autre part, une matrice de résine de type thermoplastique ou thermodurcissable ou un mélange des deux, peut, par exemple, être réalisée par un procédé dit "direct" ou par un procédé dit "indirect". Un procédé direct est défini par le fait qu'un ou plusieurs renforts fibreux sont mis en oeuvre à l'état "sec" (c'est-à-dire sans la matrice finale), la résine ou matrice, de type thermoplastique, thermodurcissable ou un mélange des deux, étant mise en oeuvre séparément, par exemple par injection dans le moule contenant les renforts fibreux (procédé "RTM", de l'anglais Resin Transfer Molding), par infusion (dans un moule, au travers de l'épaisseur des renforts fibreux : procédé "LRI", de l'anglais Liquid Resin Infusion ou procédé "RFI", de l'anglais Resin Film Infusion), ou bien encore par enduction/imprégnation manuelle au rouleau ou au pinceau, sur chacune des couches unitaires de renfort fibreux, appliquées de manière successive sur la forme. Un procédé indirect est défini par le fait que les fibres et la résine sont au préalable associées avant d'être mises en oeuvre et les renforts fibreux mis en oeuvre sont nommés préimprégnés.

Pour les procédés RTM, LRI ou RFI, il faut en général tout d'abord fabriquer une préforme fibreuse de la forme de l'article fini désiré puis imprégner cette préforme d'une résine thermoplastique, thermodurcissable ou d'un mélange des deux. La résine est injectée ou infusée par différentiel de pressions puis thermocompressée pour entraîner son durcissement après polymérisation. Dans les renforts fibreux adaptés aux procédés directs, les fils de renfort sont généralement associés pour conférer un caractère unitaire à la pièce, appelée alors préforme, par un collage avec un liant polymérique dont le pourcentage en masse par rapport à la masse totale du renfort fibreux (c'est-à-dire fils de renfort + liant polymérique) varie de 0,1 à 25 %, et avantageusement de 3 à 10 %. Dans le cas des préimprégnés adaptés aux procédés indirects, le liant représente, quant à lui, de 20 à 50%, de préférence de 30 à 40 % de la masse totale du renfort fibreux (c'est-à-dire fils de renfort + liant polymérique).

Les pièces composites utilisées dans l'industrie automobile, aéronautique ou navale, sont en particulier soumises à des exigences très strictes, en termes de propriétés mécaniques.

Pour les applications dans le domaine aéronautique, aérospatial, automobile, notamment, il est parfois nécessaire de disposer de préformes dont au moins une partie est destinée à constituer le contour d'une ouverture et présente, par exemple, une forme du type annulaire ou ellipsoïdale, comme c'est par exemple le cas pour la constitution de châssis, hublots, tuyères, entrées de réacteurs, ou tout type d'éléments de renfort destiné à être positionné en bordure d'une ouverture ou à servir de renfort de zones trouées, tels que alésages, éléments de renfort de bielle, encadrement de coin de porte, encadrement de hublot ou de pare-brise, trous d'homme ... le document EP 1 469 113 décrit un procédé de ce type.

Dans le domaine des composites, les fils sont composés d'un ensemble de filaments s'étendant sensiblement parallèlement les uns aux autres. Les fils présentent donc une certaine largeur. Aussi, les inventeurs ont constaté que lorsque, sur la surface de dépose, qui peut être plane ou non plane, les fils empruntent des trajectoires non rectilignes, et notamment courbes, des ondulations sont observées, ce qui entraîne une non-homogénéité du dépôt. Les inventeurs ont mis en évidence que ces ondulations provenaient du fait que les filaments situés au niveau des deux trajectoires extrêmes du fil devaient suivre des trajectoires de longueurs différentes. Les trajectoires extrêmes désignent les deux trajectoires que suit le fil de part et d'autre de sa largeur, mesurée parallèlement à sa surface de dépose.

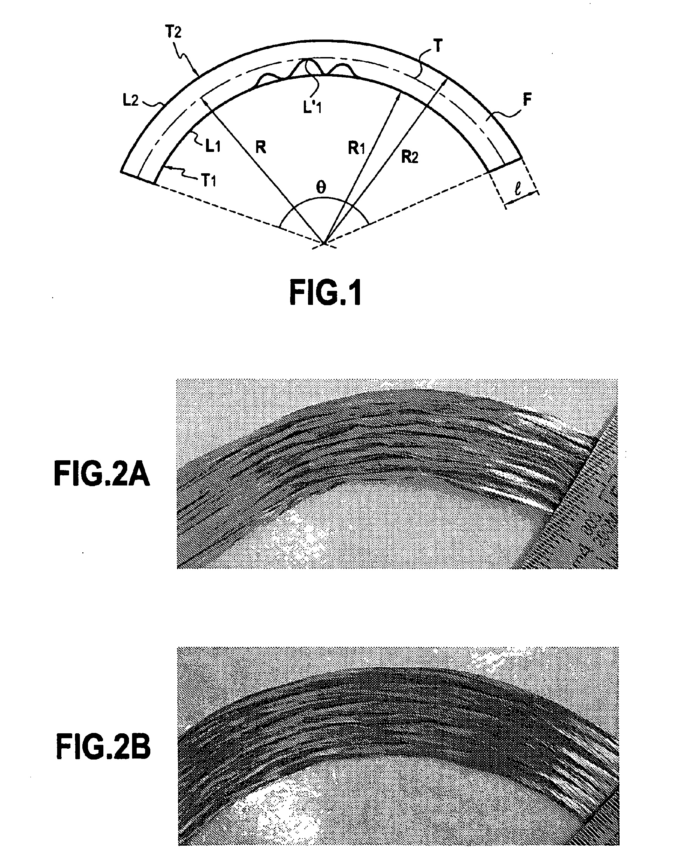

La **Figure 1** illustre ce phénomène dans le cas d'un fil déposé sur une surface plane selon une trajectoire en arc de cercle. Le fil **F** présente une largeur **1** mesurée parallèlement à la surface de dépose. La trajectoire **T** que suit la fibre moyenne (ou filament médian) du fil **F** est une portion d'arc de cercle de rayon **R** sur un angle 8. Il apparaît donc que la longueur de la trajectoire que doit suivre le fil n'est pas la même sur toute sa largeur **I,** les trajectoires extrêmes **T₁** et **T₂** présentant des longueurs différentes.

En effet, à l'extérieur de l'arc de cercle, la trajectoire **T₂,** dite externe ou maximale, est un arc de cercle de rayon **R₂** et à l'intérieur de l'arc de cercle, la trajectoire **T₁,** dite interne ou minimale, est un arc de cercle de rayon **R₁.** La trajectoire **T₁** présente donc une longueur **L₁** égale à θ**R₁** et la trajectoire **T₂** une longueur **L₂** égale à θ**R₂, L₂** étant supérieure à **L₁.** Par conséquent, au niveau de la trajectoire interne **T₁,** les filaments, qui ne présentent aucune élasticité, ont une longueur **L'₁,** qui est en fait égale à la longueur **L₂,** supérieure à leur trajectoire, ce qui entraîne un phénomène d'ondulation dû à la présence de longueur de filaments hors ou dans le plan de dépose. De telles irrégularités sont susceptibles de présenter des points de faiblesses prématurées lors de sollicitations mécaniques et donc d'entraîner une chute des performances mécaniques de la pièce obtenue.

Dans ce contexte, la présente invention se propose d'apporter un procédé de dépose amélioré permettant de remédier à ces inconvénients. L'invention concerne donc un procédé de fabrication d'un matériau composite dans lequel au moins un fil de renfort est déposé sur une surface, selon une trajectoire sur la surface de dépose présentant au moins une zone courbe, dans lequel le fil de renfort est lié à la surface au moyen d'un liant polymérique, caractérisé en ce qu'une torsion est appliquée au fil de renfort, en amont de sa dépose, de façon à au moins compenser les différences de longueur que présentent les trajectoires extrêmes du fil, de part et d'autre, de sa largeur mesurée parallèlement à la surface de dépose.

Le procédé selon l'invention présente l'une ou l'autre des caractéristiques suivantes ou une combinaison de ces caractéristiques lorsqu'elles ne s'excluent pas l'une l'autre :
- le fil de renfort est sec avant sa dépose,
- qu'une torsion de 5 à 100 t/m, de préférence de 10 à 80t/m est appliquée au fil de renfort torsadé déposé,
- le matériau composite est réalisé par dépose d'un seul fil présentant une torsion sensiblement identique sur toute sa longueur ou d'une série de fils présentant, entre eux et sur toute leur longueur, une torsion sensiblement identique,
- un fil de carbone de 3K et de 200 tex présentant une torsion de 10 à 70t/m, préférentiellement de 15 à 40t/m est déposé, notamment lorsque le rayon interne minimal de la trajectoire du fil est compris dans la gamme allant de 10 à 500 mm. En particulier, lorsque le rayon interne minimal de la trajectoire du fil est compris dans la gamme allant de 10 à 50 mm, la torsion sera supérieure à 30t/m et lorsque le rayon interne sera supérieur à 50 mm, la torsion pourra être inférieure ou égale à 30t/m,
- un fil de carbone de 6K et de 223 tex présentant une torsion de 15 à 80t/m, préférentiellement de 40 à 70t/m est déposé, notamment lorsque le rayon interne minimal de la trajectoire du fil est compris dans la gamme allant de 10 à 500 mm. En particulier, lorsque le rayon interne minimal de la trajectoire du fil est compris dans la gamme allant de 10 à 50 mm, la torsion sera supérieure à 40t/m et lorsque le rayon interne sera supérieur à 50 mm, la torsion pourra être inférieure ou égale à 40t/m,
- un fil de carbone de 6K et de 400 tex présentant une torsion de 15 à 80t/m, préférentiellement de 40 à 60t/m est déposé, notamment lorsque le rayon interne minimal de la trajectoire du fil est compris dans la gamme allant de 10 à 500 mm. En particulier, lorsque le rayon interne minimal de la trajectoire du fil est compris dans la gamme allant de 10 à 50 mm, la torsion sera supérieure à 40t/m et lorsque le rayon interne sera supérieur à 50 mm, la torsion pourra être inférieure ou égale à 40t/m,
- un fil de carbone de 12K et de 446 tex présentant une torsion de 10 à 80t/m, préférentiellement de 10 à 60t/m est déposé, notamment lorsque le rayon interne minimal de la trajectoire du fil est compris dans la gamme allant de 10 à 500 mm. En particulier, lorsque le rayon interne minimal de la trajectoire du fil est compris dans la gamme allant de 10 à 50 mm, la torsion sera supérieure à 40t/m, et notamment inférieure ou égale à 60t/m et lorsque le rayon interne sera supérieur à 50 mm, la torsion pourra être inférieure ou égale à 40t/m, notamment de 10 à 40t/m,
- un fil de carbone de 24K et de 1040 tex présentant une torsion de 10 à 40 t/m, préférentiellement de 10 à 25 t/m est déposé, notamment lorsque le rayon interne minimal de la trajectoire du fil est compris dans la gamme allant de 20 à 150 mm. En particulier, lorsque le rayon interne minimal de la trajectoire du fil est compris dans la gamme allant de 20 à 40 mm, la torsion sera supérieure à 20 t/m et lorsque le rayon interne sera supérieur à 40 mm, la torsion pourra être inférieure ou égale à 20 t/m,
- la torsion du fil déposé est soit de type S, soit de type Z, préférentiellement de type S lorsque la dépose est effectuée, sur la zone courbe de la trajectoire, dans le sens horaire,
- la surface sur laquelle le fil de renfort est déposé est constituée de fils de renfort déposés, lors d'une étape de dépose antérieure,
- la surface sur laquelle le fil de renfort est déposé est un support temporaire, éventuellement recouvert de liant polymérique,
- le liant polymérique est appliqué, préalablement, ou au fur et à mesure de la dépose du fil de renfort, sur la surface,
- le fil de renfort est associé, avant sa dépose, au liant polymérique assurant sa liaison avec la surface sur laquelle il est déposé,
- le fil de renfort est en un matériau choisi parmi les matériaux suivants : carbone, verre, aramide, silice, céramique, basalte et leurs mélanges,
- le liant polymérique comprend un système thermodurcissable, un polymère thermoplastique ou un mélange desdits polymères, éventuellement sous la forme de poudre, une résine auto-adhésive ou hot-melt,
- le pourcentage en masse de liant polymérique par rapport à la masse totale du matériau composite (c'est-à-dire fils de renfort + liant polymérique) est compris dans la gamme allant de 0,1 à 25 %, et avantageusement de 3 à 10 %, pour les préformes adaptées aux procédés directs,
- le matériau composite est une préforme préimprégnée (procédé indirect), le pourcentage en masse de liant polymérique par rapport à la masse totale du matériau composite (c'est-à-dire fils de renfort + liant polymérique) est compris dans la gamme allant de 20 à 60 %, et avantageusement de 30 à 40 %.

La présente invention a également pour objet, les matériaux composites susceptibles d'être obtenus par le procédé selon l'invention.

En particulier, l'invention concerne également un matériau composite comprenant au moins un fil de renfort déposé sur une surface, selon une trajectoire présentant au moins une zone courbe sur la surface de dépose, dans lequel le fil de renfort est lié à la surface au moyen d'un liant polymérique, caractérisé en ce que le fil de renfort est torsadé, de façon à au moins compenser les différences de longueur que présentent les trajectoires extrêmes du fil de part et d'autre de sa largeur mesurée parallèlement à la surface de dépose.

De façon avantageuse, un tel matériau composite est constitué d'un seul et unique fil ou d'une série de fils qui présentent tous, sensiblement, la même composition, largeur et torsion.

Selon des modes de réalisation particuliers, le matériau composite est réalisé à partir ;
- d'un seul ou d'une série de fils de carbone de 3K et de 200 tex présentant une torsion de 10 à 70t/m, préférentiellement de 15 à 40t/m, notamment lorsque le rayon interne minimal de la trajectoire du fil est compris dans la gamme allant de 10 à 500 mm. En particulier, lorsque le rayon interne minimal de la trajectoire du fil est compris dans la gamme allant de 10 à 50 mm, la torsion sera supérieure à 30t/m et lorsque le rayon interne sera supérieur à 50 mm, la torsion pourra être inférieure ou égale à 30t/m,
- d'un seul ou d'une série de fils de carbone de 6K et de 223 tex présentant une torsion de 20 à 80t/m, préférentiellement de 50 à 70t/m, notamment lorsque le rayon interne minimal de la trajectoire du fil est compris dans la gamme allant de 10 à 500 mm. En particulier, lorsque le rayon interne minimal de la trajectoire du fil est compris dans la gamme allant de 10 à 50 mm, la torsion sera supérieure à 40t/m et lorsque le rayon interne sera supérieur à 50 mm, la torsion pourra être inférieure ou égale à 40t/m,
- d'un seul ou d'une série de fils de carbone de 6K et de 400 tex présentant une torsion de 20 à 60t/m, préférentiellement de 40 à 60t/m, notamment lorsque le rayon interne minimal de la trajectoire du fil est compris dans la gamme allant de 10 à 500 mm. En particulier, lorsque le rayon interne minimal de la trajectoire du fil est compris dans la gamme allant de 10 à 50 mm, la torsion sera supérieure à 40t/m et lorsque le rayon interne sera supérieur à 50 mm, la torsion pourra être inférieure ou égale à 40t/m,
- d'un seul ou d'une série de fils de carbone de 12K et de 446 tex présentant une torsion de 10 à 80t/m, préférentiellement de 10 à 60t/m, notamment lorsque le rayon interne minimal de la trajectoire du fil est compris dans la gamme allant de 10 à 500 mm. En particulier, lorsque le rayon interne minimal de la trajectoire du fil est compris dans la gamme allant de 10 à 50 mm, la torsion sera supérieure à 40t/m, et notamment inférieure ou égale à 60t/m et lorsque le rayon interne sera supérieur à 50 mm, la torsion pourra être inférieure ou égale à 40t/m, notamment de 10 à 40t/m,
- d'un seul ou d'une série de fils de carbone de 24K et de 1040 tex présentant une torsion de 10 à 40 t/m, préférentiellement de 10 à 25 t/m, notamment lorsque le rayon interne minimal de la trajectoire du fil est compris dans la gamme allant de 20 à 150 mm. En particulier, lorsque le rayon interne minimal de la trajectoire du fil est compris dans la gamme allant de 20 à 40 mm, la torsion sera supérieure à 20 t/m et lorsque le rayon interne sera supérieur à 40 mm, la torsion pourra être inférieure ou égale à 20 t/m.

La description qui suit, en référence aux figures annexées, permet de mieux comprendre l'invention :
La **Figure 1** présente schématiquement le phénomène d'ondulation observé dans le cas de la dépose d'un fil non torsadé sur une surface, selon une trajectoire sur une surface de dépose, la dite trajectoire présentant au moins une zone courbe sur la surface de dépose.
La **Figure 2B** est une photo d'un pli de nappe de fils torsadés, la **Figure 2A** étant une photo d'un pli analogue dans le cas de fils non torsadés.
Les **Figure 3** et **4** représentent des vues schématiques de dessus de plis de nappe de fils torsadés.
Les **Figures 5** et **7** sont des photographies de matériaux composites conformes à l'invention, sous la forme d'un disque, analogue à celui présenté **Figure 4****.**
La **Figure 6** représente schématiquement un dispositif de dépose d'une nappe de fils torsadés.

Selon un autre mode de réalisation particulier, ce matériau composite est réalisé à partir d'un seul ou d'une série de fils de renfort dont la torsion est soit de type S, soit de type Z, préférentiellement de type S lorsque la dépose est effectuée, sur la zone courbe de la trajectoire, dans le sens horaire. Pour les définitions de ce que l'on entend par torsion de type S ou Z, on pourra se référer à l'ouvrage « Handbook of Weaving », p 16-17 de Sabit Adanur, Professor, department of Textile Engineering, Auburn, USA, ISBN 1-58716-013-7.

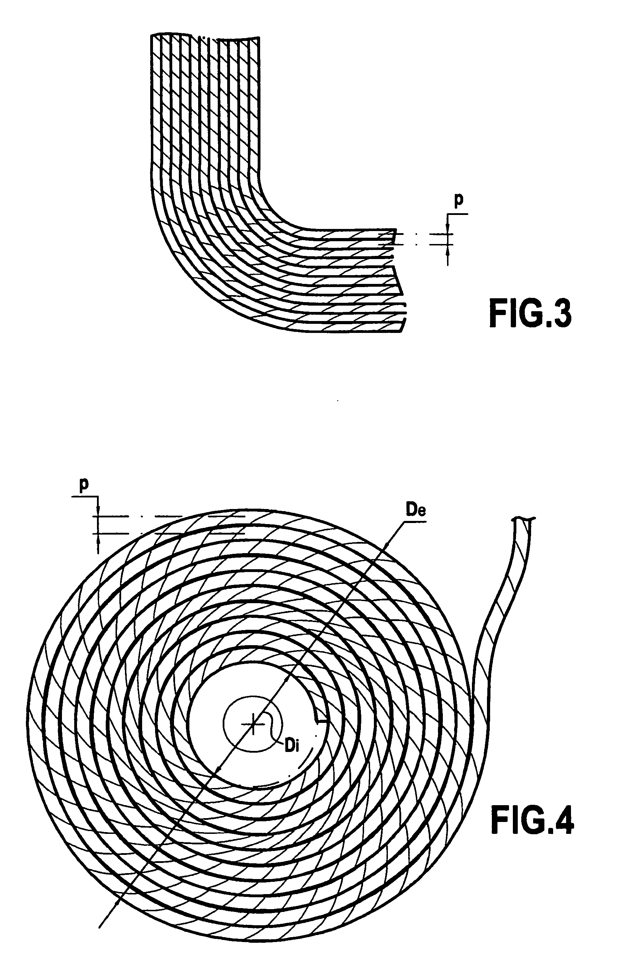

En particulier, ce matériau composite est composé d'un seul fil torsadé déposé bord à bord selon des trajectoires sensiblement parallèles les unes aux autres (à l'exception des points de rebroussement) ou d'une série de fils torsadés déposés sensiblement parallèlement les uns aux autres et de façon jointive. En fonction des possibilités autorisées par le grammage, le titre et la torsion des fils utilisées, les fils sont positionnés pour minimiser, voire éviter la présence de jour entre deux fils voisins. Un tel exemple de réalisation est par exemple illustré, de façon schématique, **Figure 3****.** Selon un exemple de réalisation, un fil est déposé de manière à former une spirale de fils torsadés, chaque spire étant déposée bord à bord avec la suivante. Un tel exemple de réalisation est, par exemple, illustré, de façon schématique, **Figure 4****.** De tels matériaux composites peuvent être obtenus par dépose de fils torsadés sur une surface non plane, ou de préférence, sur une surface plane.

Dans le cadre de l'invention, on utilise un fil auquel on a appliqué une torsion, c'est-à-dire une rotation relative des bords externes du fil, autour de sa fibre moyenne, de manière à ce que ceux-ci décrivent une trajectoire en hélice, c'est-à-dire que la tangente en chaque point fait un angle sensiblement constant avec une direction donnée. Chaque fil est torsadé individuellement. Ainsi, lorsque le fil emprunte une trajectoire présentant au moins une zone courbe sur la surface de dépose (qui peut être plane ou non plane), la torsion appliquée au fil permet de compenser le fait que les deux trajectoires extrêmes du fil présentent des longueurs différentes. Les trajectoires extrêmes désignent les deux trajectoires que suit le fil de part et d'autre de sa largeur, mesurée parallèlement à sa surface de dépose. Sur la zone courbe, l'axe de rotation de la trajectoire d'un fil sur la surface de dépose est normal au plan tangent à la surface de dépose. L'application d'une torsion permet d'éviter les ondulations constatées avec la dépose de fil non torsadé, et ce à l'échelle des filaments constitutifs du fil ou de chaque fil, lorsque le matériau est réalisé à l'aide de plusieurs fils. De façon avantageuse, le matériau composite est réalisé avec un seul fil présentant une torsion sensiblement identique sur toute sa longueur ou avec une série de fils présentant, entre eux et sur toute leur longueur, une torsion sensiblement identique. La **Figure 2** présente deux photos : la **Figure 2A** présente une préforme obtenue par dépose de fils non torsadés, alors que la **Figure 2B** présente une préforme obtenue par dépose de fils torsadés. Dans le deuxième cas, la préforme obtenue est plus homogène et sans ondulation, étant donné que la torsion permet d'obtenir une homogénéité de la longueur des filaments à l'intérieur du fil.

En effet, un fil est en général constitué d'un ensemble de fils ou filaments et comporte, en général, dans le cas des fils de carbone, de 3 000 à 80 000 filaments, avantageusement de 12 000 à 24 000 filaments. Les fils de renfort utilisés dans le cadre de l'invention sont, de préférence, en une matière choisie parmi le carbone, les céramiques, verres, silices, basaltes ou aramides, ou tout autre matériau utilisé dans le domaine des matériaux composites, les fibres pouvant être naturelles ou synthétiques. Le carbone est, néanmoins, particulièrement préféré. Les céramiques utilisables sont notamment le carbure de silicium et les oxydes réfractaires, par exemple, alumine et zircone. De façon, particulièrement préférée, dans le cadre de l'invention, des fils de carbone de 3 à 24K, sont utilisés. Les fibres constitutives peuvent être discontinues, craquées ou de préférence continues. Les fils utilisés présentent en général une section droite transversale sensiblement circulaire (qualifiés de fils ronds) ou, de préférence, sensiblement parallélépipédique ou elliptique (qualifiés de fils plats). Ces fils présentent une certaine largeur et épaisseur. A titre d'exemple, un fil plat, c'est-à-dire avant application de la torsion, de carbone de 3K et d'un titre de 200 tex d'un titre de 446 tex, une largeur de 2 à 5 mm, un fil plat de 12K d'un titre de 800tex, une largeur entre 3 et 7mm, un fil plat de carbone de 24K et d'un titre de 1600 tex, une largeur de 5 à 12 mm, et un fil plat de carbone de 24K et d'un titre de 1040 tex, une largeur de 5 à 10 mm.. Un fil plat de carbone de 3 000 à 24 000 filaments présentera donc le plus souvent une largeur de 1 à 12 mm. Parmi les fils de carbone, on peut distinguer des fils Haute Résistance (HR) dont le module en traction est compris entre 220 et 241GPa et dont la contrainte à rupture en traction est comprise entre 3450 et 4830MPa, les fils de Module Intermédiaire (IM) dont le module en traction est compris entre 290 et 297GPa et dont la contrainte à rupture en traction est comprise entre 3450 et 6200MPa et les Fils Haut Module (HM) dont le module en traction est compris entre 345 et 448GPa et dont la contrainte à rupture en traction est comprise entre 3450 et 5520Pa (d'après le le « ASM Handbook », ISBN 0-87170-703-9, ASM International 2001).

Au sens de l'invention, une torsion déterminée est appliquée au fil avant sa dépose. Une telle torsion peut, par exemple, être obtenue au moyen d'une retordeuse. En théorie, pour éviter les surlongueurs de filaments, il suffirait d'appliquer une torsion de 1 tour à répartir sur la longueur de la trajectoire sur laquelle le fil présente des trajectoires extrêmes différentes. En pratique, le collage du fil et la réorganisation des filaments à l'intérieur de celui-ci lors de sa dépose, permet d'appliquer une torsion différente de un tour par longueur de trajectoire.

A titre d'exemple, une torsion de 5 à 100 t/m, de préférence de 10 à 80t/m pourra être appliquée. A titre d'exemple spécifique, dans le cas d'un fil de carbone de 3K et de titre 200 tex, une torsion de 10 à 70t/m, préférentiellement de 15 à 40t/m sera appliquée ; dans le cas d'un fil de carbone de 6K et de 223 tex, une torsion de 15 à 80t/m, préférentiellement de 50 à 70t/m sera appliquée, dans le cas d'un fil de carbone de 6K et de 400 tex, une torsion de 15 à 80t/m, préférentiellement de 40 à 60t/m sera appliquée, dans le cas d'un fil de carbone de 12K et de 446Tex, une torsion de 10 à 80t/m, préférentiellement de 10 à 60t/m sera appliquée et, dans le cas d'un fil de carbone de 24K et de 1040Tex, une torsion de 10 à 40t/m, préférentiellement de 10 à 25t/m sera appliquée.

La largeur et le titre du fil correspondent, soit aux données du fournisseur, soit de préférence à la largeur moyenne calculée ou mesurée du fil. Le rayon minimal de la trajectoire interne du fil est déterminé de la façon suivante. On calcule sur toute la trajectoire du fil, pour chaque zone dans lesquelles la trajectoire sur la surface de dépose n'est pas rectiligne, le rayon de la trajectoire interne T₁ du fil et on prend le plus petit rayon obtenu sur l'ensemble de ces zones. Lorsqu'une série de fils parallèles les uns aux autres sont déposés, simultanément ou successivement, on appliquera, de préférence, à chacun des fils une seule et même torsion.

La torsion appliquée sera ajustée par l'homme du métier en fonction du rayon minimal interne (plus faible rayon qu'empruntent les bords internes du fil) et du rayon maximal externe (plus grand rayon qu'empruntent les bords externes du fil) que présente le ou les fils sur l'ensemble du matériau composite à réaliser, des espaces laissés libres entre deux fils consécutifs, ainsi que du titre du fil et de la masse surfacique de carbone désirée. De manière préférée, on appliquera une torsion suffisante pour minimiser, voire totalement éliminer les ondulations, mais la moins importante possible afin d'optimiser les performances mécaniques du matériau obtenu.

De façon préférée, le matériau est réalisé avec un minimum de fils nécessaires pour minimiser les points d'arrêt Lorsque plusieurs fils sont déposés parallèlement les uns aux autres, simultanément ou successivement, la même torsion sera, de préférence, appliquée à tous les fils constitutifs du matériau composite. Pour déterminer la torsion à appliquer, on appliquera, préférentiellement, à l'ensemble des fils, la torsion nécessaire pour avoir un dépôt satisfaisant au niveau de la trajectoire du fil qui présente le rayon de courbure interne minimal, cette torsion étant forcément suffisante pour obtenir un dépôt sans ondulation dans les parties de la trajectoire où le fil (ou les autres fils) présente un rayon de courbure interne supérieur. Une attention particulière sera portée, sur l'absence d'espaces libres entre les fils, et notamment sur les zones proches de leur rayon externe maximal.

La liaison des fils sur la surface de dépose est réalisée par collage, grâce à un liant polymérique. Aucune liaison par couture ou tricotage n'est réalisée. Par liant polymérique, on entend une composition polymérique contenant un polymère ou un mélange de polymères, notamment un polymère thermoplastique ou un système thermodurcissable comprenant ou non un durcisseur et/ou un accélérateur. Le liant polymérique peut être utilisé soit en quantité juste suffisante pour lier les fils à la surface sur laquelle ils sont déposés, soit en quantité suffisante pour également jouer le rôle de matrice dans le composite final : le liant représente, alors, de 20 à 60%, de préférence de 30 à 40 % de la masse totale du renfort fibreux (c'est-à-dire fils de renfort + liant polymérique). Le liant polymérique, peut notamment se présenter sous la forme d'une poudre, d'un film, d'un voile ou d'un fil de liage thermofusible.

Selon un mode de réalisation préféré de l'invention, les fils utilisés, dans le cadre de l'invention, peuvent être, secs avant dépose, c'est-à-dire qu'ils ne sont ni imprégnés, ni enduits, ni associés à un quelconque liant polymérique avant leur passage dans les moyens de torsion, ni, de préférence, avant leur dépose. En effet, de façon avantageuse, afin de mieux maitriser la dépose du fil, celle-ci sera appliquée sur un fil sec. Aussi, le fil torsadé est constitué essentiellement de fibres ou de filaments qui représentent au moins 98% de sa masse, le taux massique d'ensimage standard pouvant représenter au plus 2% de la masse du fil. Dans ce cas, le liant polymérique est, par exemple, appliqué sur la surface de dépose, soit en amont de la dépose, soit au fur et à mesure de la dépose. La surface de dépose peut donc être recouverte d'un film, d'un voile ou d'une poudre de liant polymérique.

Selon une forme de mise en oeuvre de l'invention, il est utilisé, en tant que liant polymérique, une poudre thermoplastique ou une poudre thermodurcissable ou, encore, un mélange des deux. Parmi les poudres thermoplastiques utilisables, il est possible de citer à titre d'exemples non limitatifs les poudres de polyoléfine, de polyamide, de Polyéthersulfone (PES), de Poly(Sulfure de Phénylène) (PPS), PolyEtherEtherCétone (PEEK), ou Polyétherimide (PEI), tandis que, parmi les poudres thermodurcissables, il est possible de citer, à titre d'exemples non limitatifs, les poudres de polymères époxydes avec ou sans agent durcisseur, les poudres phénoliques, les poudres de polyester. Le procédé prévoit alors d'assurer un chauffage de la zone de dépose du fil de renfort. Ce chauffage peut être réalisé, soit au niveau du point de dépose du fil de renfort par une résistance chauffante intégrée au dispositif de dépose du fil, soit au moyen d'une source rayonnante de chaleur dirigée vers la zone de dépose du fil de renfort.

Selon l'invention, il peut également être mis en oeuvre une surface de support temporaire préalablement recouverte, en partie au moins, par un liant polymérique choisi parmi les poudres thermoplastiques et thermodurcissables, éventuellement en mélange, les colles auto-adhésive ou les colles hot-melt, les voiles thermoplastiques et thermodurcissables, éventuellement en mélange, nécessitant une activation thermique.

Selon une autre caractéristique de l'invention, il est mis en oeuvre, en tant que liant, une colle, de même nature chimique que les poudres ci-dessus, utilisée sous forme fondue encore appelée « hot-melt ». Cette résine hot-melt est alors déposée sur le support, soit au fur et à mesure de la dépose du fil de renfort et en amont de la dépose du fil de renfort, soit lors d'une étape antérieure.

Selon une autre caractéristique de l'invention, il est mis en oeuvre, en tant que liant polymérique, une solution ou une émulsion pulvérisable d'au moins une résine adhésive, telle que, par exemple mais non exclusivement, une résine polyacrylique, polyvinylique ou polyuréthane.

Selon une autre caractéristique de l'invention néanmoins non préférée, il est possible d'associer le fil au liant polymérique, en amont de sa dépose. Ceci peut être fait par mise en oeuvre d'un fil thermoplastique guipé sur le fil de renfort qui est alors chauffé au niveau de son point de dépose. Le fil thermoplastique peut être de toute nature appropriée et, par exemple mais non exclusivement, comprendre un fil en Polyamide, Polyoléfine, Polyéthersulfone (PES), PolyétherétherCétone (PEEK), Poly(Sulfure de Phénylène) (PPS), ou Polyétherimide (PEI). Il est également possible de mettre en oeuvre un liant polymérique, intimement lié au fil de renfort pour former un fil de renfort hybride. Ainsi, il est possible d'utiliser, en tant que liant polymérique des filaments de matière thermoplastique ou thermodurcissable, par exemple de la famille des phénoxy, de même nature que les fils thermoplastiques ci-dessus, qui seront mélangés à des filaments de matériau de renfort, mélange qui sera filé pour former un fil de renfort hybride.

Le matériau selon l'invention est de faible épaisseur, son épaisseur correspondant à celle du fil (ou des fils) torsadé qui le constitue.

Selon l'invention, le fil de renfort est, de préférence, déposé de façon continue ou, au contraire, en segments discontinus. Il est avantageux, par exemple dans le cas d'une dépose d'un fil en spirale, de déposer le fil de manière continue, sur la longueur maximale du fil, de manière à minimiser, voire éviter les points de coupure. Selon un exemple de réalisation, un fil est déposé de manière à former une spirale de fils torsadés, chaque spire étant déposée bord à bord avec la suivante. Un tel exemple de réalisation où le matériau composite se présente sous la forme d'un disque, est, par exemple, illustré, de façon schématique, **Figure 4****.** De tels matériaux composites peuvent être obtenus par dépose de fils torsadés sur une surface non plane, ou de préférence, sur une surface plane.

Dans le cas de réalisation d'un matériau composite présentant une partie rectiligne et une partie dite de coin, sous la forme d'un ruban courbe, où les fils sont déposés selon une portion d'arc de cercle comme présenté **Figure 2B** ou **3****,** il pourra être avantageux de déposer simultanément une série de fils parallèles, de manière à couvrir en une seule fois la largeur de la préforme souhaitée.

Afin de pouvoir donner avec précision la trajectoire souhaitée au fil et que celui-ci la conserve après sa dépose, celui-ci sera amené, sans tension ou avec un minimum de tension jusqu'au point de dépose, de manière à ce que celui-ci soit déposé à l'état de repos.

Selon invention, en fonction de la nature du fil de renfort et du liant polymérique utilisé, il sera appliqué, sur le fil de renfort lors de sa dépose, une pression comprise entre 0,01 bar et 30 bar et, de préférence, comprise entre 0,1 bar et 1 bar. De même, selon la nature du liant polymérique utilisé et du fil de renfort et, plus particulièrement, en cas d'utilisation d'un liant polymérique thermoplastique ou thermo-adhésif, le point de dépose du fil de renfort sera chauffé à une température comprise entre 50 °C et 450 °C et, de préférence, comprise entre 50 °C et 150 °C.

Les exemples ci-après permettent d'illustrer l'invention.

### Exemple 1

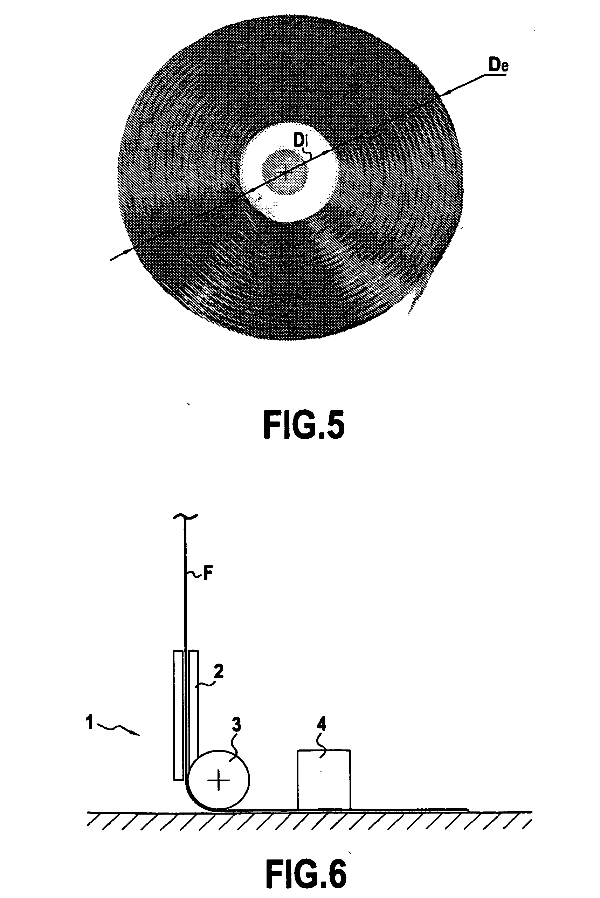

Une spirale telle que représentée sur la représentation schématique de la **Figure 4** ou sur la photo de la **Figure 5****,** de diamètre **Dᵢ** interne de 15 mm et de diamètre externe **Dₑ** est réalisée par dépose de fil de carbone 3K de 200 tex (HTA 5131 de la société Tenax) torsadé avec une torsion de 50 t/m. Le pas **p** de dépose entre 2 trajectoires moyennes consécutives est de 0,98 mm. Le fil est déposé selon une spirale sur un papier silicone poudré à 15 g/m² avec une résine époxy contenant un durcisseur (7 P160, de la société Akzo Nobel). La préforme obtenue présente une épaisseur de 0,2 mm.

Le dispositif schématisé sur la **Figure 6** est mis en oeuvre. Le fil **F** est amené, sans tension au niveau du doigt de dépose **1** dans lequel une résistance chauffante **2** à une température de 300°C est intégrée. Le fil est appliqué sur la surface au moyen d'un rouleau applicateur **3** de 2 mm de rayon avec une pression au contact de 10KPa. La vitesse de défilement du fil est synchronisée avec la vitesse d'avancement du doigt de dépose qui est de 20 mm/s. En aval du point de dépose, un élément de refroidissement **4** est appliqué sur le fil de manière à appliquer sur ce dernier une pression de 10KPa.

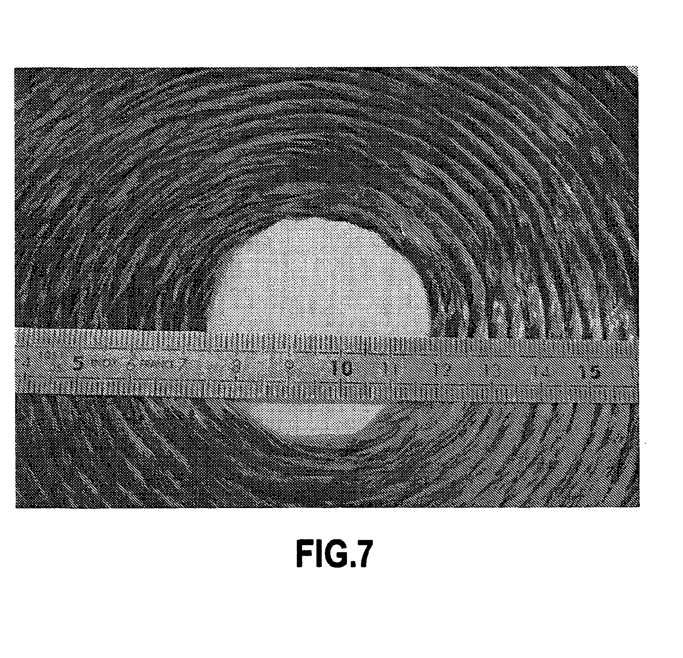

De même, une spirale telle que représentée sur la représentation schématique de la **Figure 4** et présentée partiellement sur la photographie de la **Figure 7****,** de diamètre **Di** interne de 40 mm et de diamètre externe **De** est réalisée par dépose de fil de carbone 24K de 1040 tex (T800S de la société Toray) torsadé avec une torsion de 22 t/m. Le pas **p** de dépose entre 2 trajectoires moyennes consécutives est de 3,88 mm. Le fil est déposé selon une spirale sur un film de résine époxy (Hexply M21, de la société Hexcel) de densité surfacique égale à 72 g/m². La préforme obtenue présente une épaisseur moyenne de 0,25 mm.

### Exemple 2

En utilisant un dispositif analogue au précédent, permettant la dépose simultanée de 23 fils, une préforme destinée à renforcer un coin de porte, tel qu'illustré sur la représentation schématique de la **Figure 3****,** est réalisée : sur un angle de 90°, un arc de cercle de diamètre interne égal à 95 mm et de diamètre externe égale à 475 mm est réalisé par dépose de fils de carbone de 12K et de 446 tex (IM7-6000 de Hexcel) torsadés avec une torsion de 30 t/m. Le pas de dépose, espace entre les fibres médianes de deux fils consécutifs, est de 1,65 mm. La dépose est réalisée sur un film de résine époxy (Hexply 8552, de la société Hexcel) de densité surfacique égale à 72 g/m².

La préforme obtenue présente une épaisseur moyenne de 0,25 mm.

## Revendications

1. Procédé de fabrication d'un matériau composite dans lequel on dépose au moins un fil de renfort sur une surface, selon une trajectoire présentant au moins une zone courbe sur la surface de dépose, dans lequel le fil de renfort est lié à la surface au moyen d'un liant polymérique, **caractérisé en ce qu'**une torsion est appliquée au fil de renfort, en amont de sa dépose, de façon à au moins compenser les différences de longueur que présentent les trajectoires extrêmes du fil de part et d'autre de sa largeur mesurée parallèlement à la surface de dépose.

2. Procédé selon la revendication 1 **caractérisé en ce que** le fil de renfort est sec avant sa dépose.

3. Procédé selon la revendication 1 ou 2 **caractérisé en ce qu'**une torsion de 5 à 100 t/m, de préférence de 10 à 80t/m est appliquée.

4. Procédé selon l'une des revendications 1 à 3 **caractérisé en ce que** :
- soit un fil de carbone de 3K et de 200 tex présentant une torsion de 10 à 70t/m, préférentiellement de 15 à 40t/m est déposé, notamment lorsque le rayon interne minimal de la trajectoire du fil est compris dans la gamme allant de 10 à 500 mm,
- soit un fil de carbone de 6K et de 223 tex présentant une torsion de 15 à 80t/m, préférentiellement de 50 à 70t/m est déposé, notamment lorsque le rayon interne minimal de la trajectoire du fil est compris dans la gamme allant de 10 à 500 mm,
- soit un fil de carbone de 6K et de 400 tex présentant une torsion de 15 à 80t/m, préférentiellement de 40 à 60t/m est déposé, notamment lorsque le rayon interne minimal de la trajectoire du fil est compris dans la gamme allant de 10 à 500 mm,
- soit un fil de carbone de 12K et de 446 tex présentant une torsion de 10 à 80t/m, préférentiellement de 10 à 60t/m est déposé, notamment lorsque le rayon interne minimal de la trajectoire du fil est compris dans la gamme allant de 10 à 500 mm,
- soit un fil de carbone de 24K et de 1040 tex présentant une torsion de 10 à 40 t/m, préférentiellement de 10 à 25 t/m est déposé, notamment lorsque le rayon interne minimal de la trajectoire du fil est compris dans la gamme allant de 20 à 150 mm.

5. Procédé selon l'une des revendications 1 à 4 **caractérisé en ce que** le matériau composite est réalisé par dépose d'un seul fil présentant une torsion sensiblement identique sur toute sa longueur ou d'une série de fils présentant, entre eux et sur toute leur longueur, une torsion sensiblement identique.

6. Procédé selon l'une des revendications 1 à 5 **caractérisé en ce que** la surface sur laquelle le fil de renfort est déposé est un support temporaire.

7. Procédé selon l'une des revendications 1 à 6 **caractérisé en ce que** le liant polymérique est appliqué, préalablement, ou au fur et à mesure de la dépose du fil de renfort, sur la surface.

8. Procédé selon la revendication 1 **caractérisé en ce que** le fil de renfort est associé, avant sa dépose, au liant polymérique assurant sa liaison avec la surface sur laquelle il est déposé.

9. Procédé selon l'une des revendications 1 à 8 **caractérisé en ce que** le fil de renfort est en un matériau choisi parmi les matériaux suivants : carbone, verre, aramide, silice, céramique, basalte et leurs mélanges.

10. Procédé selon l'une des revendications 1 à 9 **caractérisé en ce que** le liant polymérique comprend un polymère thermodurcissable, un polymère thermoplastique ou un mélange desdits polymères, éventuellement sous la forme de poudre, ou une résine auto-adhésive ou hot-melt.

11. Procédé selon l'une des revendications 1 à 10 **caractérisé en ce que** le pourcentage en masse de liant polymérique par rapport à la masse totale du matériau composite (c'est-à-dire fils de renfort + liant polymérique) est compris dans la gamme allant de 0,1 à 25 %, et avantageusement de 3 à 10 %, ou dans la gamme allant de 20 à 60 %, et avantageusement de 30 à 40 %.

12. Matériau composite comprenant au moins un fil de renfort déposé sur une surface, selon une trajectoire présentant au moins une zone courbe sur la surface de dépose, dans lequel le fil de renfort est lié à la surface au moyen d'un liant polymérique, **caractérisé en ce que** le fil de renfort est torsadé, de façon à au moins compenser les différences de longueur que présentent les trajectoires extrêmes du fil de part et d'autre de sa largeur mesurée parallèlement à la surface de dépose.

13. Matériau composite selon la revendication 12 **caractérisé en ce qu'**il est constitué d'un seul et unique fil ou d'une série de fils qui présentent tous, sensiblement, la même composition, largeur et torsion.

14. Matériau composite selon la revendication 12 ou 13 **caractérisé en ce qu'**il est constitué d'un seul ou d'une série de fils de renfort chacun, torsadé individuellement avec une torsion de 5 à 100 t/m, de préférence de 10 à 80t/m.

15. Matériau composite selon l'une des revendications 12 à 14 **caractérisé en ce qu'**il est réalisé à partir :
- soit d'un seul ou d'une série de fils de carbone de 3K et de 200 tex présentant une torsion de 10 à 70t/m, préférentiellement de 15 à 40t/m, notamment lorsque le rayon interne minimal de la trajectoire du fil est compris dans la gamme allant de 10 à 500 mm,
- soit d'un seul ou d'une série de fils de carbone de 6K et de 223 tex présentant une torsion de 20 à 80t/m, préférentiellement de 50 à 70t/m, notamment lorsque le rayon interne minimal de la trajectoire du fil est compris dans la gamme allant de 10 à 500 mm,
- soit d'un seul ou d'une série de fils de carbone de 6K et de 400 tex présentant une torsion de 20 à 80t/m, préférentiellement de 40 à 60t/m, notamment lorsque le rayon interne minimal de la trajectoire du fil est compris dans la gamme allant de 10 à 500 mm,
- soit d'un seul ou d'une série de fils de carbone de 12K et de 446 tex présentant une torsion de 10 à 80t/m, préférentiellement de 10 à 60t/m, notamment lorsque le rayon interne minimal de la trajectoire du fil est compris dans la gamme allant de 10 à 500 mm,
- soit d'un seul ou d'une série de fils de carbone de 24K et de 1040 tex présentant une torsion de 10 à 40 t/m, préférentiellement de 10 à 25 t/m notamment brsque le rayon interne minimal de la trajectoire du fil est compris dans la gamme allant de 20 à 150 mm.

16. Matériau composite selon l'une des revendications 12 à 15 **caractérisé en ce qu'**il est composé d'un seul fil torsadé déposé bord à bord selon des trajectoires sensiblement parallèles les unes aux autres ou d'une série de fils torsadés déposés sensiblement parallèlement les uns aux autres et de façon jointive.

17. Matériau composite selon l'une des revendications 12 à 16 **caractérisé en ce qu'**il est composé d'une spirale de fils torsadés, chaque spire étant déposée bord à bord avec la suivante.

18. Matériau composite selon l'une des revendications 12 à 17 **caractérisé en ce que** le fil de renfort est en un matériau choisi parmi les matériaux suivants : carbone, verre, aramide, silice, céramique, basalte et leurs mélanges.

19. Matériau composite selon l'une des revendications 12 à 18 **caractérisé en ce que** le liant polymérique comprend un polymère thermodurcissable, un polymère thermoplastique ou un mélange desdits polymères, éventuellement sous la forme d'une poudre, d'un film, d'un voile ou d'une résine auto-adhésive ou hot-melt.

20. Matériau composite selon l'une des revendications 12 à 19 **caractérisé en ce que** le pourcentage total en masse de liant polymérique par rapport à la masse totale du matériau composite (c'est-à-dire fils de renfort + liant polymérique) est compris dans la gamme allant de 0,1 à 25 %, et avantageusement de 3 à 10 % ou dans la gamme allant de 20 à 60 %, et avantageusement de 30 à 40 %.

21. Matériau composite selon la revendication 12, susceptible d'être obtenu selon l'une des revendications 1 à 11.

## Claims

1. Fabrication process for a composite material in which at least one reinforcement thread is deposited on a surface, along a path with at least one curved area on the deposition surface, in which the reinforcement thread is bound to the surface by means of a polymeric binder, **characterized in that** a twist is applied to the reinforcement thread before its deposition, so as to at least compensate for the length differences of the extreme paths of the thread on one side and the other of its width measured parallel to the deposition surface.

2. Process according to claim 1 **characterized in that** the reinforcement thread is dry before its deposition.

3. Process according to claim 1 or 2 **characterized in that** a twist of 5 to 100 t/m, preferably of 10 to 80 t/m is applied.

4. Process according to one of the claims 1 to 3 **characterized in that** :
- a thread of carbon of 3K and of 200 tex with a twist of 10 to 70 t/m, preferably of 15 to 40 t/m is deposited, notably when the minimum internal radius of the path of the thread is in the range of 10 to 500 mm, or
- a thread of carbon of 6K and of 223 tex with a twist of 15 to 80 t/m, preferably of 50 to 70 t/m is deposited, notably when the minimum internal radius of the path of the thread is in the range of 10 to 500 mm, or
- a thread of carbon of 6K and of 400 tex with a twist of 15 to 80 t/m, preferably of 40 to 60 t/m is deposited, notably when the minimum internal radius of the path of the thread is in the range of 10 to 500 mm, or
- a thread of carbon of 12K and of 446 tex with a twist of 10 to 80 t/m, preferably of 10 to 60 t/m is deposited, notably when the minimum internal radius of the path of the thread is in the range of 10 to 500 mm, or
- a thread of carbon of 24K and of 1040 tex with a twist of 10 to 40 t/m, preferably of 10 to 25 t/m is deposited, notably when the minimum internal radius of the path of the thread is in the range of 20 to 150 mm.

5. Process according to one of the claims 1 to 4 **characterized in that** the composite material is created by deposition of a single thread with a twist essentially identical on its entire length or of a group of threads with, among themselves and on their entire length, an essentially identical twist.

6. Process according to one of the claims 1 to 5 **characterized in that** the surface on which the reinforcement thread is deposited is a temporary support.

7. Process according to one of the claims 1 to 6 **characterized in that** the polymeric binder is applied to the surface, beforehand or during the deposition process of the reinforcement thread.

8. Process according to claim 1 **characterized in that** the reinforcement thread is associated, before its deposition, with the polymeric binder assuring its bond with the surface on which it is deposited.

9. Process according to one of the claims 1 to 8 **characterized in that** the reinforcement thread is of a material selected among the following materials: carbon, glass, aramid, silica, ceramic, basalt and their mixtures.

10. Process according to one of the claims 1 to 9 **characterized in that** the polymeric binder contains a thermosetting polymer, a thermoplastic polymer or a mixture of said polymers, possibly in the form of powder, or an self-adhesive or hot-melt resin.

11. Process according to one of the claims 1 to 10 **characterized in that** the weight percentage of polymeric binder with respect to the total weight of the composite material (that is, reinforcement threads + polymeric binder) is in the range of 0.1 to 25%, and advantageously of 3 to 10%, or in the range of 20 to 60%, and advantageously of 30 to 40%.

12. Composite material comprising at least one reinforcement thread deposited on a surface, along a path with at least one curved area on the deposition surface, in which the reinforcement thread is bound to the surface by means of a polymeric binder, **characterized in that** the reinforcement thread is twisted, so as to at least compensate for the differences of length of the extreme paths of the thread on both sides of its width measured parallel to the deposition surface.

13. Composite material according to claim 12 **characterized in that** it is composed of a single and unique thread or of a group of threads which all have essentially the same composition, width and twist.

14. Composite material according to claim 12 or 13 **characterized in that** it is composed of a single or a group of reinforcement threads each of them twisted individually with a twist of 5 to 100 t/m, preferably of 10 to 80 t/m.

15. Composite material according to one of the claims 12 to 14 **characterized in that** it is created from :
- a single or a group of carbon threads of 3K and of 200 tex with a twist of 10 to 70 t/m, preferably of 15 to 40 t/m, notably when the minimum internal radius of the path of the thread is in the range of 10 to 500 mm, or
- a single or a group of carbon threads of 6K and of 223 tex with a twist of 20 to 80 t/m, preferably of 50 to 70 t/m, notably when the minimum internal radius of the path of the thread is in the range of 10 to 500 mm, or
- a single or a group of carbon threads of 6K and of 400 tex with a twist of 20 to 80 t/m, preferably of 40 to 60 t/m, notably when the minimum internal radius of the path of the thread is in the range of 10 to 500 mm, or
- a single or a group of carbon threads of 12K and of 446 tex with a twist of 10 to 80 t/m, preferably of 10 to 60 t/m, notably when the minimum internal radius of the path of the thread is in the range of 10 to 500 mm, or
- a single or a group of carbon threads of 24K and of 1040 tex with a twist of 10 to 40 t/m, preferably of 10 to 25 t/m, notably when the minimum internal radius of the path of the thread is in the range of 20 to 150 mm.

16. Composite material according to one of the claims 12 to 15 **characterized in that** it is composed of a single twisted thread deposited edge to edge along paths essentially parallel to each other or of a group of twisted threads deposited essentially parallel to each other and joined together.

17. Composite material according to one of the claims 12 to 16 **characterized in that** it is composed of a spiral of twisted threads, each turn being deposited edge to edge with the next.

18. Composite material according to one of the claims 12 to 17 **characterized in that** the reinforcement thread is of a material selected among the following materials: carbon, glass, aramid, silica, ceramic, basalt and their mixtures.

19. Composite material according to one of the claims 12 to 18 **characterized in that** the polymeric binder contains a thermosetting polymer, a thermoplastic polymer or a mixture of said polymers, possibly in the form of a powder, of a film, of a web or of an self-adhesive or hot-melt resin.

20. Composite material according to one of the claims 12 to 19 **characterized in that** the total weight percentage of polymeric binder with respect to the total weight of the composite material (that is, reinforcement threads + polymeric binder) is in the range of 0.1 to 25%, and advantageously of 3 to 10%, or in the range of 20 to 60%, and advantageously of 30 to 40%.

21. Composite material according to claim 12, capable of being obtained according to one of the claims 1 to 11.

## Patentansprüche

1. Verfahren zur Herstellung eines Verbundwerkstoffs, wobei wenigstens ein Verstärkungsfaden auf eine Fläche, entlang einer wenigstens einen gekrümmten Bereich aufweisenden Bahn auf der Ablagefläche, aufgelegt wird, wobei der Verstärkungsfaden durch ein polymeres Bindemittel mit der Fläche verbunden wird, **dadurch gekennzeichnet, daß** der Verstärkungsfaden vor seinem Auflegen derart verdrillt wird, daß die Längenunterschiede, die die äußersten Bahnen des Fadens auf beiden Seiten seiner parallel zur Ablagefläche gemessenen Breite aufweisen, wenigstens kompensiert werden.

2. Verfahren nach Anspruch 1, **dadurch gekennzeichnet, daß** der Verstärkungsfaden vor seinem Auflegen trocken ist.

3. Verfahren nach Anspruch 1 oder 2, **dadurch gekennzeichnet, daß** eine Verdrillung von 5 bis 100 tpm, vorzugsweise von 10 bis 80 tpm angelegt wird.

4. Verfahren nach einem der Ansprüche 1 bis 3, **dadurch gekennzeichnet, daß**:
- entweder ein 3K-Carbonfaden mit 200 tex, der eine Verdrillung von 10 bis 70 tpm, vorzugsweise von 15 bis 40 tpm aufweist, aufgelegt wird, insbesondere wenn der Mindestinnenradius der Bahn des Fadens im Bereich zwischen 10 und 500 mm liegt,
- oder ein 6K-Carbonfaden mit 223 tex, der eine Verdrillung von 15 bis 80 tpm, vorzugsweise von 50 bis 70 tpm aufweist, aufgelegt wird, insbesondere wenn der Mindestinnenradius der Bahn des Fadens im Bereich zwischen 10 und 500 mm liegt,
- oder ein 6K-Carbonfaden mit 400 tex, der eine Verdrillung von 15 bis 80 tpm, vorzugsweise von 40 bis 60 tpm aufweist, aufgelegt wird, insbesondere wenn der Mindestinnenradius der Bahn des Fadens im Bereich zwischen 10 und 500 mm liegt,
- oder ein 12K-Carbonfaden mit 446 tex, der eine Verdrillung von 10 bis 80 tpm, vorzugsweise von 10 bis 60 tpm aufweist, aufgelegt wird, insbesondere wenn der Mindestinnenradius der Bahn des Fadens im Bereich zwischen 10 und 500 mm liegt,
- oder ein 24K-Carbonfaden mit 1040 tex, der eine Verdrillung von 10 bis 40 tpm, vorzugsweise von 10 bis 25 tpm aufweist, aufgelegt wird, insbesondere wenn der Mindestinnenradius der Bahn des Fadens im Bereich zwischen 20 und 150 mm liegt.

5. Verfahren nach einem der Ansprüche 1 bis 4, **dadurch gekennzeichnet, daß** der Verbundwerkstoff durch Auflegen eines einzigen Fadens, der eine über seine gesamte Länge im wesentlichen identische Verdrillung aufweist, oder einer Reihe von Fäden, die untereinander sowie über ihre gesamte Länge eine im wesentlichen identische Verdrillung aufweisen, gebildet wird.

6. Verfahren nach einem der Ansprüche 1 bis 5, **dadurch gekennzeichnet, daß** die Fläche, auf die der Verstärkungsfaden aufgelegt wird, ein temporärer Träger ist.

7. Verfahren nach einem der Ansprüche 1 bis 6, **dadurch gekennzeichnet, daß** das polymere Bindemittel vorab oder mit zunehmendem Auflegen des Verstärkungsfadens auf die Fläche aufgebracht wird.

8. Verfahren nach Anspruch 1, **dadurch gekennzeichnet, daß** der Verstärkungsfaden vor seinem Auflegen dem polymeren Bindemittel zugeordnet wird, das dessen Verbinden mit der Fläche, auf die er aufgelegt wird, sicherstellt.

9. Verfahren nach einem der Ansprüche 1 bis 8, **dadurch gekennzeichnet, daß** der Verstärkungsfaden aus einem Material besteht, das aus den folgenden Materialien ausgewählt ist: Kohlenstoff, Glas, Aramid, Siliciumdioxid, Keramik, Basalt und deren Mischungen.

10. Verfahren nach einem der Ansprüche 1 bis 9, **dadurch gekennzeichnet, daß** das polymere Bindemittel ein duroplastisches Polymer, ein thermoplastisches Polymer oder eine Mischung aus den genannten Polymeren, eventuell in Pulverform, oder ein selbsthaftendes oder Hot-Melt-Harz umfaßt.

11. Verfahren nach einem der Ansprüche 1 bis 10, **dadurch gekennzeichnet, daß** der Masseprozentsatz an polymerem Bindemittel bezogen auf die Gesamtmasse des Verbundwerkstoffs (das heißt Verstärkungsfaden + polymeres Bindemittel) im Bereich zwischen 0,1 und 25 % und vorteilhafterweise zwischen 3 und 10 %, oder im Bereich zwischen 20 und 60 % und vorteilhafterweise zwischen 30 und 40 % liegt.

12. Verbundwerkstoff, der wenigstens einen Verstärkungsfaden aufweist, der auf eine Fläche, entlang einer wenigstens einen gekrümmten Bereich aufweisenden Bahn auf der Ablagefläche, aufgelegt ist, wobei der Verstärkungsfaden durch ein polymeres Bindemittel mit der Fläche verbunden ist, **dadurch gekennzeichnet, daß** der Verstärkungsfaden derart verdrillt ist, daß die Längenunterschiede, die die äußersten Bahnen des Fadens auf beiden Seiten seiner parallel zur Ablagefläche gemessenen Breite aufweisen, wenigstens kompensiert werden.

13. Verbundwerkstoff nach Anspruch 12, **dadurch gekennzeichnet, daß** er aus einem einzigen Faden oder aus einer Reihe von Fäden besteht, die alle im wesentlichen die gleiche Zusammensetzung, Breite und Verdrillung aufweisen.

14. Verbundwerkstoff nach Anspruch 12 oder 13, **dadurch gekennzeichnet, daß** er aus einem einzigen oder aus einer Reihe von Verstärkungsfäden besteht, die jeweils einzeln mit einer Verdrillung von 5 bis 100 tpm, vorzugsweise von 10 bis 80 tpm verdrillt sind.

15. Verbundwerkstoff nach einem der Ansprüche 12 bis 14, **dadurch gekennzeichnet, daß** er gebildet ist aus:
- entweder einem einzigen oder aus einer Reihe von 3K-Carbonfäden mit 200 tex, die eine Verdrillung von 10 bis 70 tpm, vorzugsweise von 15 bis 40 tpm aufweisen, insbesondere wenn der Mindestinnenradius der Bahn des Fadens im Bereich zwischen 10 und 500 mm liegt,
- oder aus einem einzigen oder einer Reihe von 6K-Carbonfäden mit 223 tex, die eine Verdrillung von 20 bis 80 tpm, vorzugsweise von 50 bis 70 tpm aufweisen, insbesondere wenn der Mindestinnenradius der Bahn des Fadens im Bereich zwischen 10 und 500 mm liegt,
- oder aus einem einzigen oder einer Reihe von 6K-Carbonfäden mit 400 tex, die eine Verdrillung von 20 bis 80 tpm, vorzugsweise von 40 bis 60 tpm aufweisen, insbesondere wenn der Mindestinnenradius der Bahn des Fadens im Bereich zwischen 10 und 500 mm liegt,
- oder aus einem einzigen oder einer Reihe von 12K-Carbonfäden mit 446 tex, die eine Verdrillung von 10 bis 80 tpm, vorzugsweise von 10 bis 60 tpm aufweisen, insbesondere wenn der Mindestinnenradius der Bahn des Fadens im Bereich zwischen 10 und 500 mm liegt,
- oder aus einem einzigen oder einer Reihe von 24K-Carbonfäden mit 1040 tex, die eine Verdrillung von 10 bis 40 tpm, vorzugsweise von 10 bis 25 tpm aufweisen, insbesondere wenn der Mindestinnenradius der Bahn des Fadens im Bereich zwischen 20 und 150 mm liegt.

16. Verbundwerkstoff nach einem der Ansprüche 12 bis 15, **dadurch gekennzeichnet, daß** er aus einem einzigen verdrillten Faden besteht, der entlang von im wesentlichen zueinander parallelen Bahnen Seite an Seite aufgelegt ist, oder aus einer Reihe von verdrillten Fäden, die im wesentlichen parallel zueinander und aneinanderstoßend aufgelegt sind.

17. Verbundwerkstoff nach einem der Ansprüche 12 bis 16, **dadurch gekennzeichnet, daß** er aus einer Spirale verdrillter Fäden besteht, wobei jede Windung Seite an Seite mit der nächsten aufgelegt ist.

18. Verbundwerkstoff nach einem der Ansprüche 12 bis 17, **dadurch gekennzeichnet, daß** der Verstärkungsfaden aus einem Material besteht, das aus den folgenden Materialien ausgewählt ist: Kohlenstoff, Glas, Aramid, Siliciumdioxid, Keramik, Basalt und deren Mischungen.

19. Verbundwerkstoff nach einem der Ansprüche 12 bis 18, **dadurch gekennzeichnet, daß** das polymere Bindemittel ein duroplastisches Polymer, ein thermoplastisches Polymer oder eine Mischung aus den genannten Polymeren, eventuell in Form eines Pulvers, eines Films, eines Schleiers oder eines selbsthaftenden oder Hot-Melt-Harzes umfaßt.

20. Verbundwerkstoff nach einem der Ansprüche 12 bis 19, **dadurch gekennzeichnet, daß** der Gesamtmasseprozentsatz an polymerem Bindemittel bezogen auf die Gesamtmasse des Verbundwerkstoffs (das heißt Verstärkungsfaden + polymeres Bindemittel) im Bereich zwischen 0,1 und 25 % und vorteilhafterweise zwischen 3 und 10 %, oder im Bereich zwischen 20 und 60 % und vorteilhafterweise zwischen 30 und 40 % liegt

21. Verbundwerkstoff nach Anspruch 12, der geeignet ist, nach einem der Ansprüche 1 bis 11 erhalten zu werden.
